# EUROPÄISCHE PATENTSCHRIFT

(11) **EP 1 511 608 B1**
(45) Veröffentlichungstag und Bekanntmachung des Hinweises auf die Patenterteilung: **06.08.2008**
(21) Anmeldenummer: 03756917.5
(22) Anmeldetag: 28.05.2003
(51) Int. Cl.: B29B 13/10, B02C 18/12, B01F 13/10, B01F 15/00

(54) **VORRICHTUNG ZUR BEHANDLUNG VON KUNSTSTOFFGUT**
DEVICE FOR TREATING PLASTIC MATERIAL
DISPOSITIF POUR TRAITER UN PRODUIT EN MATIÈRE PLASTIQUE

(30) Priorität: 10.06.2002 AT 8782002
(43) Veröffentlichungstag der Anmeldung: 09.03.2005
(73) Patentinhaber: EREMA Engineering Recycling Maschinen und Anlagen Gesellschaft m.b.H., 4052 Ansfelden (AT)
(72) Erfinder: Helmut Bacher, 4490 St. Florian (AT); Helmuth Schulz, 4020 Linz (AT); Georg Wendelin, 4033 Linz (AT)
(74) Vertreter: Wildhack, Helmut
(86) Internationale Anmeldenummer: PCT/AT2003/000158
(87) Internationale Veröffentlichungsnummer: WO 2003/103916

(56) Entgegenhaltungen:
- WO-A-93/18902
- DE-A- 2 814 958
- DE-B- 1 144 693
- US-A- 2 424 679
- US-A- 2 665 853
- US-A- 3 638 917
- US-A- 5 409 313
- US-A- 5 947 599

## Beschreibung

Die Erfindung bezieht sich auf eine Vorrichtung gemäß dem Oberbegriff des Anspruches 1.

Vorrichtungen zur Behandlung von Kunststoffgut sind z.B. aus der AT 375 867 B, AT 407 970 B oder WO 93/18902 bekannt. Durch die umlaufenden Werkzeugträger bzw. Werkzeuge wird das behandelte Kunststoffgut durch Fliehkraftwirkung gegen die Behälterseitenwand geschleudert. Ein Anteil dieses Kunststoffgutes steigt entlang der Behälterseitenwand hoch und läuft in Form einer Mischtrombe um, fällt aber letztlich wieder ins Behälterzentrum zurück. Dadurch ergibt sich die gewünschte Verweilzeit der behandelten Kunststoffteilchen im Aufnahmebehälter, sodass das in ihn eingebrachte Kunststoffgut gut gemischt, durch die auftretenden Reibungskräfte ausreichend erwärmt und, im Fall von auf das Kunststoffgut zerkleinernd wirkenden Werkzeugen, auch ausreichend zerkleinert wird. Es hat sich jedoch gezeigt, dass nicht das gesamte zur Behälterseitenwand geschleuderte Kunststoffgut an dieser Wand hochsteigt, sondern ein Anteil nach unten unter das unterste Werkzeug bzw. unter die unterste einen Werkzeugträger bildende Scheibe gelangt. Dort kann dieser Kunststoffgutanteil durch Reibung unkontrolliert anschmelzen. Man hat versucht, diesen Nachteil durch Anbringung von Förderrippen an der Unterseite dieser Scheibe zu vermeiden, aber völlig befriedigt hat diese Maßnahme nicht.

**Eine Vorrichtung der eingangs genannten Art ist aus der** US-A-3155376 **bekannt**

Die Erfindung setzt sich zur Aufgabe, den geschilderten Nachteil mit geringem Aufwand zu vermeiden, um dadurch nicht nur die Störungsanfälligkeit der Vorrichtung zu verringern, sondern auch das gesamte, in den Aufnahmebehälter eingebrachte Kunststoffgut gleichmäßiger zu behandeln, weil dem Verbleib von Kunststoffgut im Bereich des Behälterbodens, also unterhalb des untersten Werkzeuges, wirksam entgegen gewirkt wird.

Die Scheibe **trägt** zusätzlich zu den Werkzeugen zumindest eine Schaufel trägt, die über den Rand der Scheibe in Richtung zur Seitenwand des Aufnahmebehälters vorsteht und zur Horizontalebene so geneigt ist, dass das von der Scheibe durch die Werkzeuge abgeschleuderte Kunststoffgut bei seinem Umlauf eine nach oben gerichtete Bewegungskomponente erhält. Unabhängig davon, ob nun der Umlauf des Kunststoffgutes nur durch die Werkzeuge oder auch durch diese tragende Werkzeugträger bewirkt wird, wobei einzelne Werkzeuge bzw. Werkzeugträger von bloßen Stangen, die von der Welle in horizontaler Richtung nach außen ragen, gebildet sein können, wird über die Schaufeln das bewegte Kunststoffgut nach oben abgelenkt und damit wirksam verhindert, dass das Gut nach unten absinkt. Dieser Effekt kann nicht nur dafür ausgenutzt werden, ein Absinken des verarbeiteten Kunststoffgutes unter den untersten, von der Scheibe gebildeten Werkzeugträger weitgehendst zu verhindern, sondern auch dazu, dass abgesunkenes Kunststoffgut sofort wieder in die umlaufende Mischtrombe zurückgeführt wird und nicht unkontrolliert durch lange Verweilzeit unter Reibung unter dem untersten Werkzeugträger anschmilzt. Wenn mehrere Werkzeugträger in mehreren Ebenen übereinander angeordnet sind, dann bewirken die Schaufeln bei den oberen Werkzeugträgern eine Hochförderung des umlaufenden Kunststoffgutes und somit eine Verlängerung der Verweilzeit.

Gemäß der Erfindung steht die Schaufel auch nach oben und unten über die Scheibe vor, um die auf das Kunststoffgut wirkende aktive Fläche möglichst groß zu machen.

Da, wie eingangs erwähnt, im Bodenbereich des Aufnahmebehälters angeordnete, als Werkzeugträger bildende Scheiben bekannt sind, ist es im Rahmen der Erfindung problemlos möglich, auch bereits bestehende solche Anlagen nachzurüsten.

Weitere Kennzeichen und Vorteile der Erfindung ergeben sich aus der Beschreibung von Ausführungsbeispielen, welche in der Zeichnung schematisch dargestellt sind.

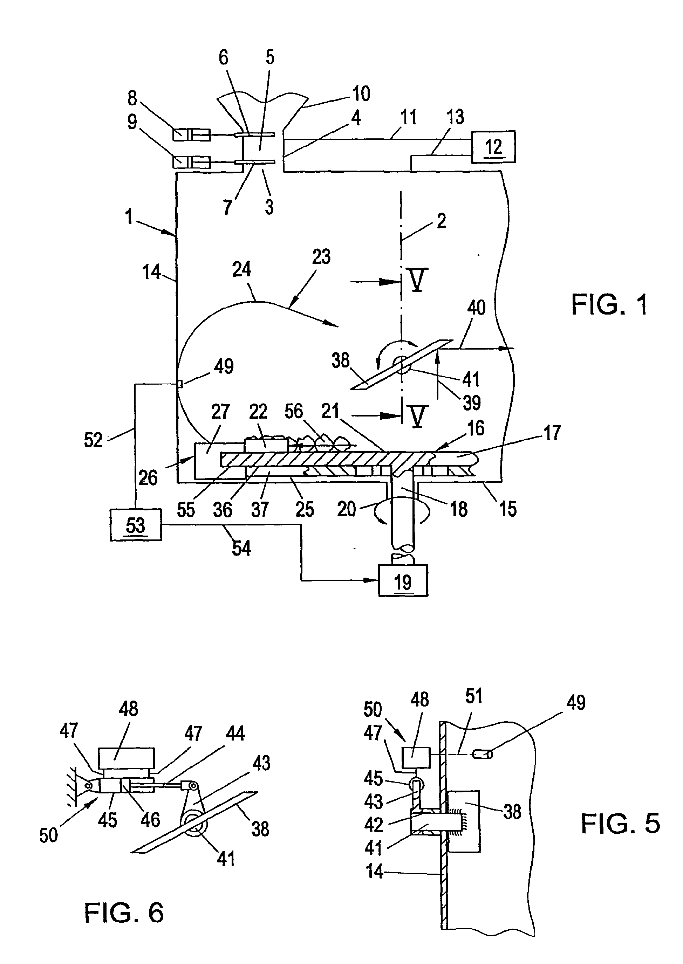

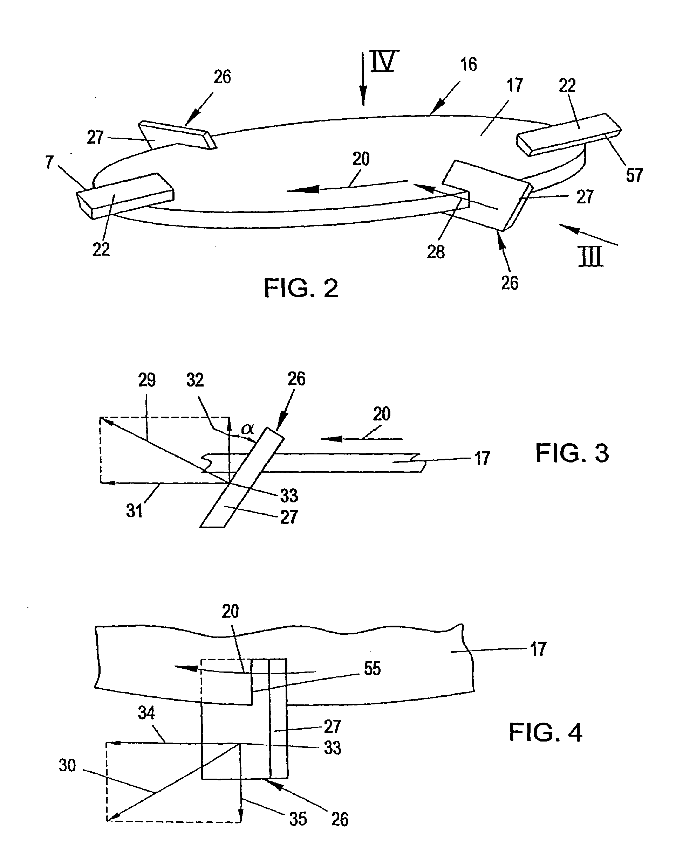

Fig. 1 zeigt einen Vertikalschnitt durch eine erfindungsgemäße Vorrichtung. Fig. 2 zeigt einen mit Schaufeln ausgebildeten scheibenförmigen Werkzeugträger in axonometrischer Ansicht. Fig. 3 ist eine Ansicht in Richtung des Pfeiles III der Fig. 2. Fig. 4 ist eine Draufsicht in Richtung des Pfeiles IV der Fig. 2. Fig. 5 ist ein Schnitt nach der Linie V-V der Fig. 1 und Fig. 6 zeigt eine Seitenansicht zu einem Detail der Fig. 5.

Die Vorrichtung nach Fig. 1 hat einen Aufnahmebehälter 1 mit Kreisquerschnitt und mit vertikaler Achse 2, in welchen das zu verarbeitende Kunststoffmaterial, insbesondere thermoplastischer Art, z.B. PET (Polyäthylenterephthalat), in Form von Mahlgut aus Flaschen oder Flaschenvorformlingen, Folien, Flakes usw. von oben durch eine Einbringeöffnung 3 eingebracht wird. An diese Öffnung 3 ist, wenn das zu verarbeitende Material unter Vakuum verarbeitet werden muss, eine Schleuse 4 angeschlossen, deren Schleusenkammer 5 durch zwei Schieber 6, 7 abschließbar ist, welche von doppeltwirkenden Zylindern 8, 9. hin und her bewegt werden können. An die Schleuse 4 ist oben ein Einfülltrichter 10 angeschlossen, in welchen das zu verarbeitende Material chargenweise oder kontinuierlich durch eine nicht dargestellte Zufuhreinrichtung, z.B. ein Förderband, eingebracht wird. An die Schleusenkammer 5 ist eine Evakuierungsleitung 11 angeschlossen, die zu einer Evakuierungseinrichtung 12 führt. Eine weitere Evakuierungsleitung 13 führt vom Aufnahmebehälter 1 zur Evakuierungseinrichtung 12.

Der Aufnahmebehälter 1 hat vertikale Seitenwände 14 und einen horizontalen Boden 15. Nahe dem Boden 15 ist ein Werkzeugträger 16 angeordnet, der von einer horizontalen kreisförmigen Scheibe 17 gebildet ist (siehe auch Fig. 2), die auf einer den Boden 15 vakuumdicht durchsetzenden Welle 18 sitzt, die von einem Motor 19 zur Drehung in Richtung des Pfeiles 20 angetrieben wird. Die Scheibe 17 des Werkzeugträgers 16 trägt an ihrer Deckfläche 21 mehrere, um den Umfang des Werkzeugträgers 16 in gleichmäßigen Abständen verteilte Werkzeuge 22, welche bei der Drehung der Scheibe 17 auf das im Behälter 1 befindliche Kunststoffgut einwirken. Dadurch wird dieses Kunststoffgut einerseits zum Umlauf um die Achse 2 angetrieben, anderseits trachtet die Zentrifugalkraft das Kunststoffgut in radialer Richtung zur Seitenwand 14 zu bewegen. Es entsteht eine Mischtrombe 23 derart, dass ein Anteil des Kunststoffgutes entlang der Seitenwand 14 hoch steigt, bei diesem Umlauf einen Kulminationspunkt 24 erreicht und schließlich wieder in den Bereich der Behälterachse 2 zurück fällt. An diesem Hochsteigen nimmt aber nicht das gesamte Kunststoffgut teil, denn ein Anteil des von der Scheibe 17 abgeschleuderten Kunststoffgutes trachtet in den Raum 25 unter der Scheibe 17 zu gelangen. Um dies zu verhindern, trägt die Scheibe 17 mehrere, um den Scheibenumfang in gleichmäßigen Abständen verteilt angeordnete Schaufeln 26 (siehe auch Fig. 2 bis 4), deren jede von einer ebenen Platte 27 gebildet sein kann, deren Plattenebene radial in Bezug auf das Zentrum der Scheibe 17 gerichtet ist, jedoch zur Vertikalrichtung geneigt angeordnet ist. Dieser Neigungswinkel α (Fig. 3) kann je nach dem ins Auge gefassten Anwendungsgebiet unterschiedlich gewählt werden, zweckmäßige Neigungswinkel liegen erfahrungsgemäß zwischen 15 und 30°. Diese Anordnung und Neigung der Schaufeln 26 relativ zur Ebene der Scheibe 17 des Werkzeugträgers 16 bewirkt, dass bei der Rotation der Scheibe 17 in Richtung des Pfeiles 20 auf das jeweils von der Schaufel 26 bewegte Kunststoffteilchen ein theoretischer Kraftvektor 28 (Fig.2) ausgeübt wird (unter Vernachlässigung anderer, vergleichsweise unwesentlicher Einflussgrößen, wie Reibung der Teilchen aneinander usw.). In eine Vertikalebene projiziert, hat dieser Kraftvektor 28 eine Komponente 29 (Fig. 3), in eine Horizontalebene projiziert (Fig. 4) eine Horizontalkomponente 30. Die Vertikalkomponente 29 setzt sich aus zwei Anteilen 31, 32 zusammen. Der Anteil 31 geht vom jeweils betrachteten Punkt 33 in einer Richtung aus, die tangential gerichtet ist zu einem durch den Punkt 33 gehenden Kreis um die Behälterachse 2, welche zusammenfällt mit der Achse der Welle 18. Dieser Anteil wird hervorgerufen durch die in Umlaufrichtung der Scheibe 17 wirkende Schubkraft. Der Anteil 32 geht vom jeweils betrachteten Punkt 33 in vertikaler Richtung aus und wird hervorgerufen durch die Neigung der Platte 27 der Schaufel 26. Diese Vertikalkomponente 29 steht normal auf die Ebene der Platte 27.

In der Horizontalprojektion (Fig. 4) hat die Horizontalkomponente 30 einen in der erwähnten Tangentialrichtung vom Punkt 33 ausgehenden Anteil 34 und einen durch die Zentrifugalkraft hervorgerufenen Anteil 35, welcher in radialer Richtung der Scheibe 17 verläuft.

Diese Schaufeln 26 verleihen dem von der Scheibe 17 durch die Werkzeuge 22 abgeschleuderten Kunststoffgut eine bevorzugte Bewegung nach oben und verhindern somit wirksam, dass bei der Bearbeitung des Gutes im Behälter 1 Kunststoffgutanteile in den Raum 25 unter der Scheibe 17 des Werkzeugträgers 16 gelangen können. Dies kann unterstützt werden durch an der Bodenfläche 36 der Scheibe 17 angeordnete Rippen 37, welche so angeordnet sind, z.B. radial, dass das im Raum 25 befindliche Kunststoffgut in Richtung auf die Seitenwand 14 zu gefördert wird. Das so nach außen bewegte Kunststoffgut wird dann von den Schaufeln 26 erfasst und wieder nach oben gefördert.

Eine Steigerung der beim Umlauf des Werkzeugträgers 16 in das im Behälter 1 befindliche Kunststoffgut eingebrachten Energie lässt sich dadurch erzielen, dass an der Innenseite der Seitenwand 14 des Aufnahmebehälters 1 Leitflächen in Form von Leitschaufeln 38 (Fig. 1) angebracht sind, welche bei sinnvoller Anordnung verhindern, dass die im Behälter 1 umlaufenden Kunststoffteilchen frei nach oben ausweichen können und dadurch verhältnismäßig wenig Energie in Form von Reibungswärme aufnehmen. Vereinfacht dargestellt, treffen die nach oben aufsteigenden Kunststoffteilchen in Richtung des Pfeiles 39 auf die Leitschaufel 38 und erhalten dadurch eine Bewegungskomponente in horizontaler Richtung (Pfeil 40). Diese Umlenkung des bewegten Kunststoffteilchens bewirkt, dass ein Teil seiner Bewegungsenergie in Reibungsenergie umgewandelt und dadurch das Teilchen erwärmt wird.

Um sich an unterschiedliche Verhältnisse anpassen zu können, ist es zweckmäßig, zumindest eine der Leitschaufeln 38 verstellbar zu machen. Dies könnte durch Veränderung der wirksamen Fläche der Leitschaufel 38 geschehen, etwa durch unterschiedlich weites Einschieben in den Behälter. Konstruktiv günstiger ist eine Verstellung des Neigungswinkels der Leitschaufel 38 mittels einer mit ihr verbundenen Welle 41 (Fig. 1, 5), welche die Seitenwand 14 des Behälters 1 durchsetzt und in einem an der Seitenwand 14 befestigten Lager 42 gelagert ist. Diese Welle 41 kann händisch verdrehbar sein, etwa mittels eines Handrades, oder motorisch. Eine motorische Verstelleinrichtung 50 ist in den Fig. 5 und 6 dargestellt. Die Welle 41 ist mit einem Schwenkhebel 43 verbunden, an welchem die Kolbenstange 44 eines doppeltwirkenden Zylinders 45 angelenkt ist, dessen dem Schwenkhebel 43 abgewendetes Ende ortsfest, jedoch schwenkbar gelagert ist. Der im Zylinder 45 geführte Kolben 46 wird über Leitungen 47 von einer Druckmittelwelle 48 mit Druckmittel beaufschlagt, die in beliebiger geeigneter Weise gesteuert ist, vorzugsweise elektronisch, in Abhängigkeit von der Beschaffenheit des zu behandelnden Kunststoffgutes.

In der Regel ist es zweckmäßig, die Temperatur des im Aufnahmebehälter 1 befindlichen Kunststoffgutes zu überwachen, um dessen Erwärmung auf dem gewünschten Niveau zu halten bzw. in geeigneter Weise zu steuern. Hierzu kann im Aufnahmebehälter 1 zumindest ein Temperaturfühler 49 vorgesehen sein, der zweckmäßig an der Innenfläche der Seitenwand 14 und in einem Höhenbereich angeordnet ist, in welchem sich die Mischtrombe 23 befindet. Einer oder mehrere dieser Temperaturfühler 49 können dazu herangezogen werden, die Verstelleinrichtung 50 für zumindest eine der Leitschaufeln 38 zu steuern, was in Fig. 5 durch eine Leitung 51 angedeutet ist. Zusätzlich oder alternativ hierzu können der oder die Temperaturfühler 49 über eine Leitung 52 (Fig. 1) an eine Regeleinrichtung 53 angeschlossen sein, welche über eine Leitung 54 die Drehzahl des Motors 19 steuert.

Wie die Zeichnung zeigt, ragt jede Schaufel 26 in radialer Richtung über den Umfang der Scheibe 17 des Werkzeugträgers 16 hinaus. Außerdem erstreckt sich die Schaufel auch nach oben und nach unten über die Deckfläche 21 bzw. die Bodenfläche 36 der Scheibe 17 hinaus, um die aktive Fläche jeder Schaufel 26 zu vergrößern. Die Platte 27 jeder Schaufel 26 kann mit einem Schlitz 55 versehen sein, in den der Rand der Scheibe 17 eingreift. Es kann jedoch auch die umgekehrte Anordnung getroffen sein, das heißt die Anordnung des Schlitzes an der Scheibe 17, wobei dann die ungeschlitzte Platte 27 in diesen Schlitz eingreift. Die Sicherung dieser Verbindung kann durch Schweißung oder in sonstiger geeigneter Weise erfolgen. In vielen Fällen wird es jedoch zweckmäßig sein, die Platte 27 durch Schraubung an der Scheibe 17 zu befestigen.

Die Platte 27 jeder Schaufel 26 muss nicht eben sein, es wäre denkbar, die Platte 27 etwas zu krümmen, wobei die konkave Seite an der vorlaufenden Seite der Platte angeordnet ist. Eine solche Krümmung könnte zur Folge haben, dass die Kunststoffteilchen kurzfristig auf der Platte 27 gleiten, bevor sie nach oben abgelenkt werden. Dies würde eine schonende Beschleunigung und Behandlung der Kunststoffteilchen bewirken.

In Fig. 2 ist dargestellt, dass die Schaufeln 26 in Bezug auf die Werkzeuge 22 in Umfangsrichtung der Scheibe 17 versetzt angeordnet sind. Günstiger ist es aber, die Schaufeln 26 in der Verlängerung der Werkzeuge 22 anzuordnen, was in Fig. 1 dargestellt ist und den Vorteil hat, dass die von den Werkzeugen 22 in Richtung des Pfeiles 56 (Fig. 1) bewegten Kunststoffteilchen direkt auf die Schaufeln 26 geleitet werden.

Die erwähnten Anordnungen der Schaufeln 26 können auch bei Konstruktionen getroffen werden, bei welchen mehrere Werkzeugträger 16 übereinander angeordnet sind, wobei nicht alle Werkzeugträger als Scheiben ausgebildet und mit Schaufeln versehen sein müssen, stets jedoch der dem Behälterboden 15 am nächsten liegende Werkzeugträger 16.

Es wäre auch denkbar, die Schaufeln 26 nicht am scheibenförmigen Werkzeugträger 16 vorzusehen, sondern direkt an den Werkzeugen 22.

In der Regel wird das zu verarbeitende Kunststoffmaterial schon vorzerkleinert in den Aufnahmebehälter 1 eingebracht. Wenn eine Zerkleinerung im Behälter 1 erforderlich ist, können die Werkzeuge 22 entsprechend ausgebildet sein, z.B. als Messer mit Schneiden 57 (Fig. 2).

## Patentansprüche

1. Vorrichtung zur Behandlung von Kunststoffgut, insbesondere thermoplastischem Kunststoffgut, mit einem Aufnahmebehälter (1), der einen Boden (15) und Seitenwände (14) sowie oben eine Einbringöffnung (3) für das zu behandelnde Gut aufweist, und mit im Aufnahmebehälter (1) angeordneten Werkzeugen (22), die von einer den Boden (15) des Aufnahmebehälters (1) dicht durchsetzenden Welle (18) getragen sind, die durch einen Motor (19) zur Drehung um deren Achse angetrieben ist, wobei zumindest ein Werkzeug (22) an einem als Scheibe (17) ausgebildeten Werkzeugträger (16) an der Deckfläche (21) der Scheibe (17) befestigt ist, welche Scheibe (17) nahe dem Boden (15) des Aufnahmebehälters (1) angeordnet ist, so dass das im Aufnahmebehälter (1) befindliche Kunststoffgut eine Umlaufbewegung um die Achse der Welle (18) erhält, und wobei die Scheibe (17) zusätzlich zu den Werkzeugen (22) mehrere Schaufeln (26) trägt, die über den Rand der Scheibe (17) in Richtung zur Seitenwand (14) des Aufnahmebehälters (1) vorstehen und deren aktive Fläche zur Horizontalebene so geneigt ist, dass das von der Scheibe (17) durch die Werkzeuge (22) abgeschleuderte Kunststoffgut bei seinem Umlauf eine nach oben gerichtete Bewegungskomponente erhält, **dadurch gekennzeichnet, dass** die Schaufeln (26) auch nach oben und unten über die Scheibe (17) vorstehen.

2. Vorrichtung nach Anspruch 1, **dadurch gekennzeichnet, dass** jede Schaufel (26) von einer, vorzugsweise ebenen, Platte (27) gebildet ist, die schräg zur Ebene der Scheibe (17) an dieser befestigt ist.

3. Vorrichtung nach Anspruch 1 oder 2, **dadurch gekennzeichnet, dass** der Rand der Scheibe (17) mehrere Schaufeln (26) trägt, die in gleichen Abständen um den Umfang der Scheibe (17) verteilt sind.

4. Vorrichtung nach Anspruch 3, **dadurch gekennzeichnet, dass** die Schaufeln (26) relativ zu den Werkzeugen (22) in Umfangsrichtung der Scheibe (17) versetzt sind.

5. Vorrichtung nach einem der Ansprüche 1 bis 3, **dadurch gekennzeichnet, dass** zumindest eine Schaufel (26), in radialer Richtung der Scheibe (17) gesehen, außen an das Werkzeug (22) anschließt bzw. in der Verlängerung des Werkzeuges (22) angeordnet ist.

6. Vorrichtung nach einem der Ansprüche 1 bis 5, **dadurch gekennzeichnet, dass** an der Bodenfläche (36) der Scheibe (17) Rippen (37) vorhanden sind, die unter der Scheibe (17) befindliches Kunststoffgut nach außen in Richtung zu den Schaufeln (26) fördern.

7. Vorrichtung nach einem der Ansprüche 1 bis 6, **dadurch gekennzeichnet, dass** die Schaufel (26) einen Schlitz (55) hat, in den der Rand der Scheibe (17) eingesetzt ist oder die Scheibe (17) einen Schlitz hat, in den die Schaufel (26) eingreift, oder die Schaufel (26) durch Schraubung an der Scheibe (17) befestigt ist.

8. Vorrichtung nach einem der Ansprüche 1 bis 7, **dadurch gekennzeichnet, dass** die Schaufel (26) relativ zur Vertikalebene um 15 bis 30° geneigt ist.

9. Vorrichtung nach einem der Ansprüche 1 bis 8, **dadurch gekennzeichnet, dass** die Schaufel (26) an ihrer vorlaufenden Seite konkav ausgebildet ist.

## Claims

1. A device for treating plastics material, in particular thermoplastic plastics material, having a receiving container (1), which has a base (15) and lateral walls (14) as well as a charge opening (3) at the top for the material to be treated, and having tools (22), which are arranged in the receiving container (1) and which are carried by a shaft (18) which passes through the base (15) of the receiving container (1) in a sealed manner and which is driven by a motor (19) so as to rotate about its axis, wherein at least one tool (22) is fastened on a tool carrier (16), designed in the form of a disc (17), on the top face (21) of the disc (17), which disc (17) is situated close to the base (15) of the receiving container (1) so that the plastics material present in the receiving container (1) is set in a circulating movement about the axis of the shaft (18), whereby the disc (17) carries, in addition to the tools (22), a number of blades (26) which project beyond the edge of the disc (17) in the direction towards the lateral wall (14) of the receiving container (1) and the active surface of these blades is inclined with respect to the horizontal plane in such a way that the plastics material flung off from the disc (17) by the tools (22) is given an upwardly directed movement component during its circulation, **characterized in that** the blades (26) also project upwards and below beyond the disc (17).

2. A device according to Claim 1, **characterized in that** each blade (26) is formed by a preferably flat plate (27) which is fastened on the disc (17) obliquely to the plane of the said disc (17).

3. A device according to Claim 1 or 2, **characterized in that** the edge of the disc (17) carries a plurality of blades (26) which are distributed at equal intervals about the periphery of the disc (17).

4. A device according to Claim 3, **characterized in that** the blades (26) are offset relative to the tools (22) in the peripheral direction of the disc (17).

5. A device according to one of Claims 1 to 3, **characterized in that**, as viewed in the radial direction of the disc (17), at least one blade (26) adjoins the tool (22) on the outside or is arranged in a continuation of the tool (22).

6. A device according to one of Claims 1 to 5, **characterized in that** ribs (37), which convey plastics material present below the disc (17) outwards in the direction towards the blades (26), are provided on the bottom face (36) of the disc (17).

7. A device according to one of Claims 1 to 6, **characterized in that** the blade (26) has a slot (55) into which the edge of the disc (17) is inserted, or the disc (17) has a slot into which the blade (26) engages, or the blade (26) is fastened to the disc (17) by screwing.

8. A device according to one of Claims 1 to 7, **characterized in that** the blade (26) is inclined by 15 to 30° relative to the vertical plane.

9. A device according to one of Claims 1 to 8 , **characterized in that** the blade (26) is made concave on its leading side.

## Revendications

1. Dispositif pour traiter un produit en matière plastique, en particulier un produit en matière thermoplastique, comprenant un récipient de recueil (1), qui possède un fond (15) et des parois latéraux (14) ainsi qu'au-dessus un orifice d'admission (3) pour le produit à traiter, et ayant des outils (22) disposés dans le récipient de recueil (1) et portés par un arbre (18), qui pénètre le fond (15) du récipient de recueil (1) d'une façon étanche et est entraîné pour une rotation autour de son axe par un moteur (19), au moins un outil (22) étant monté à un porte-outil (16) formé comme un disque (17) à la surface supérieure (21) du disque (17), dans lequel ledit disque (17) est disposé près du fond (15) du récipient de recueil (1), de manière que le produit en matière plastique dans le récipient de recueil (1) obtient un mouvement de rotation autour de l'axe de l'arbre (18), et dans lequel le disque (17), additionnellement aux outils (22), porte plusieurs pelles (26), qui font saillie au delà du bord du disque (17) en direction vers la paroi latérale (14) du récipient de recueil (1), et dont la surface active est inclinée par rapport à un plan horizontal, que le produit en matière plastique lancé par le disque (17) à cause des outils (22) pendant sa rotation obtient un composant de mouvement dirigé vers le haut, **caractérisé en ce, que** les pelles (26) font aussi saillie vers le haut et vers le bas au-delà du disque (17).

2. Dispositif selon la revendication 1, **caractérisé en ce, que** chaque pelle (26) est formé d'une plaque (27), préférablement plane, qui est montée au disque (17) d'une façon inclinée au plan de ceci.

3. Dispositif selon la revendication 1 ou 2, **caractérisé en ce, que** le bord du disque (17) porte plusieurs pelles (26) distribuées d'une manière également espacée autour la circonférence du disque (17).

4. Dispositif selon la revendication 3, **caractérisé en ce, que** les pelles (26) sont décalées en direction circonférentielle du disque (17) relativement aux outils (22).

5. Dispositif selon une quelconque des revendications 1 à 3, **caractérisé en ce, qu'**au moins une pelle (26), vue en direction radiale du disque (17), se joint à l'extérieur de l'outil (22) ou est disposé comme allongement de l'outil (22).

6. Dispositif selon une quelconque des revendications 1 à 5, **caractérisé en ce, que** des nervures (37) existent à la surface de fond (36) du disque (17) et transportent le produit en matière plastique, qui se trouve au-dessous du disque (17), vers l'extérieur en direction vers les pelles (26).

7. Dispositif selon une quelconque des revendications 1 à 6, **caractérisé en ce, que** la pelle (26) a une fente (55), dans laquelle le bord du disque (17) est placé, ou que le disque (17) a une fente, dans laquelle la pelle (26) s'engrène, ou que la pelle (26) est monté au disque (17) par un vissage.

8. Dispositif selon une quelconque des revendications 1 à 7, **caractérisé en ce, que** la pelle (26) est inclinée de 15 à 30° relativement à un plan vertical.

9. Dispositif selon une quelconque des revendications 1 à 8, **caractérisé en ce, que** la pelle (26) est concave au côté avant.
